# EUROPEAN PATENT APPLICATION

(11) **EP 3 379 686 A1**
(43) Date of publication of application: **26.09.2018**
(21) Application number: 18156551.6
(22) Date of filing: 13.02.2018
(51) Int. Cl.: H02J 7/00, H02J 50/10

(54) **CONSOLE BOX**

(30) Priority: 22.03.2017 JP 2017056718
(71) Applicant: Toyoda Gosei Co., Ltd., Kiyosu-shi Aichi 452-8564 (JP)
(72) Inventor: KANTO, Toru, Kiyosu-shi, Aichi 452-8564 (JP); FUKI, Shinichiro, Kiyosu-shi, Aichi 452-8564 (JP); SHIBATA, Minoru, Kiyosu-shi, Aichi 452-8564 (JP)
(74) Representative: Kramer Barske Schmidtchen Patentanwälte PartG mbB

(57) **Abstract**

Provided is a console box that realizes power feeding to a power receiving device (that allows a power receiving device to receive power) . A console box (1) of the present invention includes: a box body (2) having a bottom portion (20), and a tubular wall portion (21) standing from a surface of the bottom portion (20) ; and a coil (3) provided at the box body (2), implemented by a conductive wire (30) wound along a peripheral direction of the wall portion (21), and forming an electromagnetic resonance field when being energized according to a predetermined condition. In the console box (1) of the present invention, power feeding of a resonance type is performed, and thus, wireless power feeding is realized in a console box where, in the case of a conventional electromagnetic-induction-type wireless power feeding, a power feeding device is difficult to be installed.

## Description

### TECHNICAL FIELD

The present invention relates to a console box, and in particular, relates to a console box that realizes power feeding to a device such as a portable terminal or the like.

### BACKGROUND ART

In recent years, portable terminals such as mobile phones are used at various places. Such a portable terminal has highly enhanced functions, and accordingly, has increased power consumption. Thus, capability of charging the portable terminal at various places is desired.

This charging capability is also desired inside vehicles. Mounting in a vehicle compartment a charging device for charging a portable terminal is being promoted. A console box of a vehicle is provided at a position that is near to a driver or a passenger, and installing a charging device to the console box is being promoted. A conventional console box is provided with a cable for power supply (or a terminal having the cable connected thereto).

In recent years, for a charging device, a mode of performing charging without using a cable (i.e., wireless charging) is attracting attentions.

A charging device (also referred to as power feeding device) of a conventional type in wireless charging mode is described in International Publication WO 2016/002205, for example.

International Publication WO 2016/002205 describes an electromagnetic-induction-type portable terminal charging device (also referred to as wireless power feeding device) for charging a portable terminal, the portable terminal charging device including: a plurality of charging coils; a plurality of detecting coils; and a controller electrically connected to the plurality of charging coils and the plurality of detecting coils . In this charging device, from among the plurality of charging coils, a charging coil corresponding to a detecting coil having detected a change in impedance is selected, the selected charging coil is caused to output a magnetic field, and the portable terminal is charged by use of the charging coil in response to the magnetic field.

However, the conventional electromagnetic-induction-type wireless power feeding device that is used in wireless charging has a problem that the power feeding distance is short. Here, the power feeding distance is the distance between a coil (also referred to as charging coil or power feeding coil) of the wireless power feeding device and a coil (also referred to as power receiving coil) of the portable terminal (also referred to as power receiving device). A short power feeding distance requires the power receiving device to be disposed at a position close to the power feeding device during charging (or during wireless power feeding).

In addition, in the case of a conventional electromagnetic-induction-type wireless charging device, the principle thereof requires that the position of the axis of the power feeding coil be coaxial with the position of the axis of the power receiving coil.

In the conventional power feeding device, a plurality of power feeding coils are densely disposed. Thus, even when positional displacement of the power receiving coil has occurred, the position of the axis of the power receiving coil and the position of the axis of any one of the power feeding coils are aligned with each other, and thus, power is fed even when positional displacement of the power receiving device has occurred. Therefore, in the case of a conventional power feeding device, in order to allow positional displacement of the power receiving device, the plurality of power feeding coils need to be densely provided in a large area, thus causing a problem of a large installation area. That is, the conventional power feeding device is difficult to be downsized, and thus, the installation position thereof is limited.

Further, in the case of a conventional electromagnetic-induction-type power feeding device, that the axial directions of the power feeding coil and the power receiving coil are aligned with each other, i.e., that the axial direction of the power receiving coil is not inclined with respect to the magnetic flux generated by the power feeding coil, is also required. That is, in the case of a conventional power feeding device, the arrangement of the power receiving device is also limited, and the installation position thereof is limited.

In addition, in the case of a conventional power feeding device, in order to increase the strength of the magnetic fields generated by the respective power feeding coils, the winding density of each power feeding coil is made large (the number of turns of each coil is made large) . Specifically, the power feeding coil is formed so as to have a narrow air core portion as the axis portion. As a result, the conventional power feeding device has mounted thereto a large number of power feeding coils each having a large number of turns, and thus, the single body of the power feeding coil and the entirety of the plurality of power feeding coils are heavy.

Thus, the conventional electromagnetic-induction-type power feeding device has a problem that the installation position thereof is limited because a plurality of coils need to be provided.

As a result, the conventional electromagnetic-induction-type power feeding device is difficult to be installed in a console box.

The present invention has been made in view of the above circumstances. An object of the present invention is to provide a console box that realizes power feeding to a power receiving device (i.e., that allows a power receiving device to receive power).

In order to solve the above problem, a console box of the present invention includes:
a box body having a bottom portion, and a tubular wall portion standing from a surface of the bottom portion; and
a coil provided at the box body, implemented as a conductive wire wound along a peripheral direction of the wall portion, and forming an electromagnetic resonance field when being energized according to a predetermined condition.

In the console box of the present invention, the coil forms an electromagnetic resonance field by being energized according to a predetermined condition. In the electromagnetic resonance field, the electromagnetic field generated by the coil is in a predetermined resonance vibration. When the coil (power receiving coil) of a power receiving device is disposed in this electromagnetic resonance field, power is fed to the power receiving device to which the power receiving coil is connected.

The console box of the present invention realizes power feeding even when the distance between the coil (power feeding coil) forming an electromagnetic resonance field and the power receiving coil becomes long. Also with respect to the positions of (and the angle between the axial directions of) the power feeding coil and the power receiving coil, the degree of freedom is high. Further, with respect to the coil forming the electromagnetic resonance field, the number of turns may be small. In addition, an air core portion may be provided at the axis thereof.

As described above, in the console box of the present invention, the problems that occur in the case of the conventional electromagnetic induction type do not occur. Thus, the console box of the present invention is applicable to the console box where, in the case of a conventional electromagnetic induction type, a power feeding device is difficult to be installed, and the console box of the present invention realizes wireless power feeding to the power receiving device.
Fig. 1 is a perspective view of a vehicle console box of Embodiment 1;
Fig. 2 is a perspective view showing a configuration of the vehicle console box of the Embodiment 1;
Fig. 3 is a cross sectional view showing a configuration of the vehicle console box of the Embodiment 1;
Fig. 4 is a diagram showing a circuit configuration of the vehicle console box of the Embodiment 1;
Fig. 5 is a diagram showing a circuit configuration of a power receiving device of the Embodiment 1;
Fig. 6 is a diagram showing power feeding efficiency according to the type of wireless power feeding of the Embodiment 1;
Fig. 7 is a cross sectional view showing a configuration of a vehicle console box of Embodiment 2;
Fig. 8 is a cross sectional view showing a configuration of a vehicle console box of Embodiment 3;
Fig. 9 is a cross sectional view showing a configuration of a vehicle console box of Embodiment 4;
Fig. 10 is a cross sectional view showing a configuration of a vehicle console box of Embodiment 5;
Fig. 11 is a cross sectional view showing a configuration of a vehicle console box of Embodiment 6;
Fig. 12 is a cross sectional view showing a configuration of a vehicle console box of Embodiment 7;
Fig. 13 is a cross sectional view showing a configuration of a vehicle console box of Embodiment 8;
Fig. 14 is a cross sectional view showing a configuration of a vehicle console box of Embodiment 9; and
Fig. 15 is a cross sectional view showing a configuration of a vehicle console box of Embodiment 10.

Hereinafter, the present invention is specificallydescribed by use of a vehicle console box as an embodiment.

### [Embodiment 1]

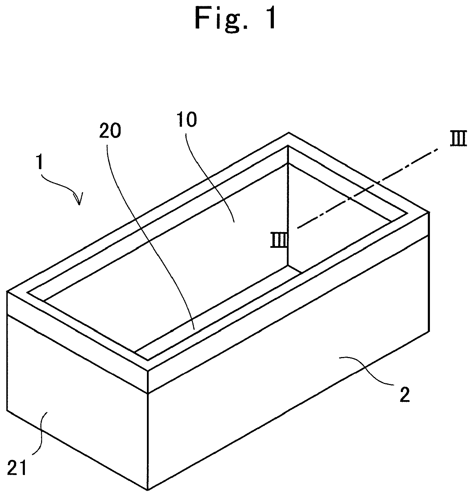

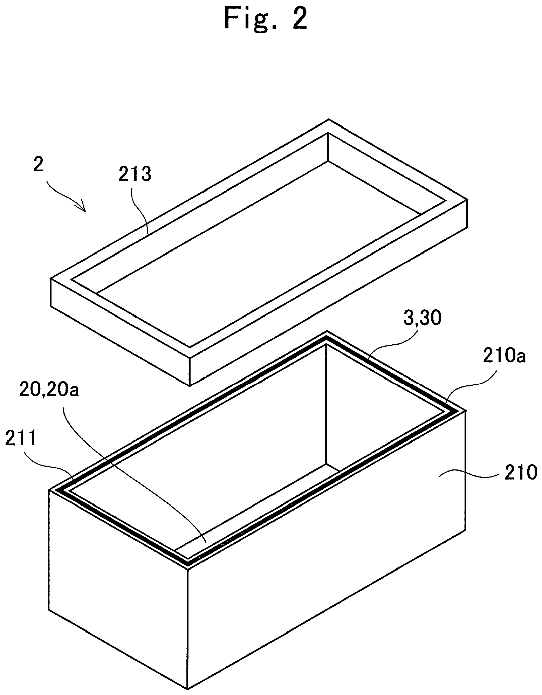

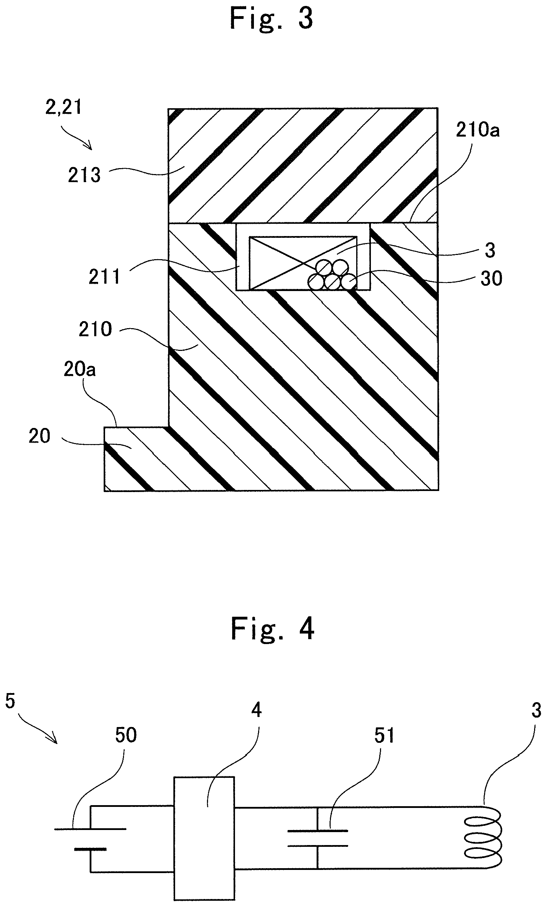

The present embodiment is a vehicle console box 1 (hereinafter, referred to as console box) shown in Fig. 1 to Fig. 6. Fig. 1 is a perspective view showing a configuration of the console box 1. Fig. 2 is a perspective view showing a configuration of a box body 2. Fig. 3 is a cross sectional view showing a cross section along a line III-III shown in Fig. 1.

The console box 1 of the present embodiment includes the box body 2 and a coil 3.

The box body 2 has : a bottom portion 20; a tubular wall portion 21 standing from a surface 20a of the bottom portion 20. The box body 2 as a whole has a vessel shape that is open at the top thereof.

The bottom portion 20 is a plate-like quadrate portion with the surface 20a facing upward. The surface 20a of the bottom portion 20 defines the lower face of a housing space 10 (inner space defined in the box body 2 having the vessel shape) of the console box 1.

The wall portion 21 is provided integrally with the bottom portion20. In the wall portion 21, the inner peripheral shape thereof along the outer peripheral shape of the surface 20a of the bottom portion 20, i.e., the inner peripheral shape at a cross section perpendicular to the axial direction of the tubular shape thereof, has a quadrate shape. The wall portion 21 defines the housing space 10 of the console box 1. The protruding height of the wall portion 21 from the surface 20a of the bottom portion 20 is constant. The wall portion 21 includes: a body member 210 standing from the surface 20a of the bottom portion 20; and a surface member 213 provided at a leading end face 210a in the protruding direction of the body member 210.

The body member 210 has a quadrate tubular shape made up of plate-like members substantially forming the wall portion 21. A recessed groove 211 having a rectangular shape in cross section is formed along the entire periphery of the leading end face 210a in the protruding direction of the body member 210. The recessed groove 211 has a looped shape extending along the leading end face 210a having a looped shape.

The surface member 213 is a quadrate loop-shaped member that matches the leading end face 210a in the protruding direction of the body member 210. The surface member 213 is assembled to the leading end face 210a in the protruding direction of the body member 210, in a state where the surface member 213 closes the opening of the recessed groove 211. The surface member 213 forms the leading end face in the protruding direction of the box body 2.

The surface member 213 is locked or fixed to the body member 210 by locking means not shown. In the present embodiment, a locking claw provided to the surface member 213 is inserted in a locking hole that is open in the body member 210, whereby the surface member 213 is locked.

The coil 3 is formed by winding a conductive wire 30 by a predetermined number of turns along the peripheral direction of the wall portion 21. The coil 3 is installed in the box body 2, in a state where the coil 3 is accommodated in the recessed groove 211. The number of turns of the coil 3 is determined on the basis of the electromagnetic resonance field that is generated. The number of turns of the coil 3 may be 1, or may be 2 or greater.

The coil 3 has both ends thereof (both ends of the conductive wire 30) connected to a power supply device 4 (not shown in Fig. 1 and Fig. 3) . The power supply device 4 is a device that energizes (the conductive wire 30 of) the coil 3. The coil 3 generates a magnetic flux through the energization, to form an electromagnetic field. Through control of an energizing condition, the coil 3 causes change of the occurring magnetic flux in a predetermined cycle, to form an electromagnetic resonance field.

In the present embodiment, a power receiving coil (a coil of a resonance circuit on the power receiving side) is disposed in the formed electromagnetic resonance field, whereby the power receiving coil is caused to resonate. Then, power generated in the power receiving coil as a result of the resonance is converted by the resonance circuit on the power receiving side, to be used. That is, in the present embodiment, a resonance type in which power is supplied via a space is used.

In the present embodiment, the power supply device 4 is connected to the coil 3 and a vehicle battery 50, thereby forming a resonance circuit 5 on the power feeding side.

In the resonance circuit 5 on the power feeding side, as shown in the circuit configuration thereof in Fig. 4, the power supply device 4 is connected to the vehicle battery 50 being a direct-current power supply. The power supply device 4 is connected to the coil 3 (power feeding coil) . A capacitor 51 is connected to the connection end between the coil 3 and the power supply device 4, in parallel to the coil 3. The capacitor 51 performs smoothing (i.e., noise removing) of current flowing into the coil 3. The power supply device 4 converts power from the vehicle battery 50 into current according to a predetermined condition, and outputs the current to the coil 3. The predetermined condition of the current outputted by the power supply device 4 to the coil 3 is a condition in which the magnetic flux generated by the coil 3 is changeable in a predetermined cycle.

The power supply device 4 includes a switching circuit that performs high-speed switching, and converts inputted direct current into current according to a predetermined condition. The power supply device 4 has a device configuration, such as a switching element performing high-speed switching, a control device controlling the switching element, and the like, for supplying current according to a predetermined condition to the coil 3. The power supply device 4 of the present embodiment is formed so as to be able to perform zero-voltage switching (ZVS) for reducing power loss such as switching loss and suppressing electromagnetic noise with respect to high-speed switching.

### (Operation in the present embodiment)

In the console box 1 of the present embodiment, a power receiving device 7 provided with a resonance circuit 6 on the power receiving side is disposed in the electromagnetic resonance field formed by the coil 3, and the resonance circuit 5 on the power feeding side and the resonance circuit 6 on the power receiving side are caused to resonate with each other, whereby power is supplied to the power receiving device 7 via a space from the coil 3. In the present embodiment, a resonance type using an electromagnetic resonance field is employed.

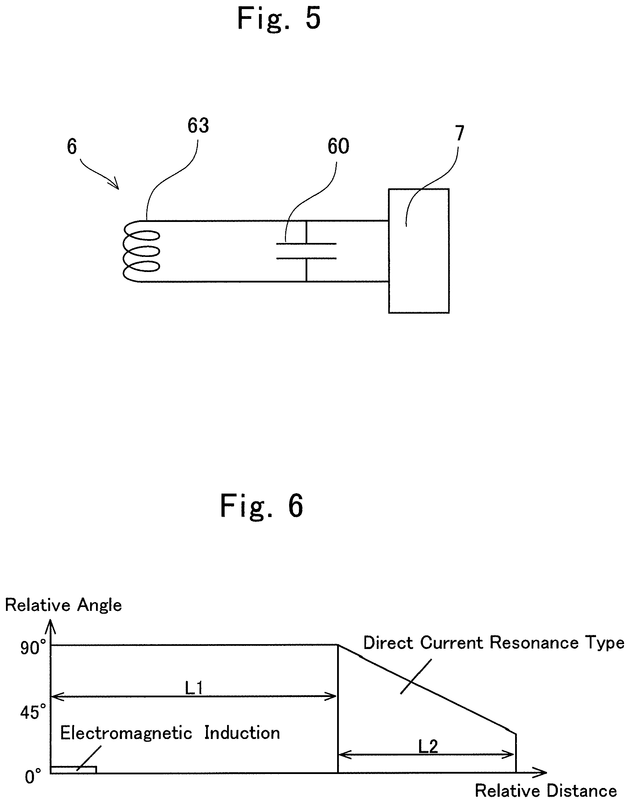

In the resonance circuit 6 on the power receiving side, as shown in the circuit configuration thereof in Fig. 5, a coil 63 (power receiving coil) on the power receiving side connected to the power receiving device 7 and a capacitor 60 are connected to each other in parallel. The capacitor 60 also functions as a power storage portion that stores part of power received by the coil 63. Even when the coil 63 of the power receiving device 7 is separated to be located at a position where the coil 63 no longer receives power from the coil 3, power is fed from the capacitor 60 to the power receiving device 7 for a certain period.

The relative distance between the power feeding coil and the power receiving coil is about several mm to 1 cm in the case of a conventional electromagnetic induction type (electromagnetic induction type conformed to Qi standard), as shown in Fig. 6. In contrast to this, in the resonance type employed in the present embodiment, the relative distance between the power feeding coil (coil 3) and the power receiving coil (coil 63) is long, i.e., about 10 cm to 20 cm. In the resonance type, when the relative distance becomes longer than a predetermined distance L1 (when the relative distance enters an L2 region), the power feeding efficiency gradually decreases.

In the conventional electromagnetic induction type (conformed to Qi standard), the relative angle between the power feeding portion and the power receiving portion, the relative angle allowing power feeding, is a very small angle of substantially 0° at which the power feeding portion and the power receiving portion are parallel to each other. In contrast to this, the relative angle between the power feeding portion and the power receiving portion, the relative angle allowing power feeding in the resonance type of the present embodiment is a large angle of substantially 90°, and the degree of freedom in arrangement of the power feeding portion and the power receiving portion is high. In the resonance type, in a case where the relative distance is longer than the predetermined distance L1, the relative angle gradually decreases if the relative distance becomes longer. As a result, in the relationship between the relative distance and the relative angle, and the power feeding efficiency, if the relative distance becomes longer than L1, the power feeding efficiency is decreased, accordingly.

### (Effect of the present embodiment)

The console box 1 of the present embodiment includes: the box body 2 having the bottom portion 20, and the tubular wall portion 21 standing from the surface 20a of the bottom portion 20; and the coil 3 provided at the box body 2, implemented as the conductive wire 30 wound along the peripheral direction of the wall portion 21, and forming an electromagnetic resonance field when being energized according to a predetermined condition.

In the console box 1 of the present embodiment, a resonance type is used. In the resonance type, a long relative distance between the power feeding portion and the power receiving portion is realized. In addition, the coil 3 need not be densely provided. As a result, even if the power receiving device 7 (coil 63) which receives power is disposed in a state where positional displacement thereof is allowed, the power receiving device 7 (coil 63) is allowed to receive power and be charged.

In the console box 1 of the present embodiment, even when the distance between the coil 3 and the power receiving coil 63 becomes long, power feeding is realized. Also with respect to the positions of (or the angle between) the coil 3 and the power receiving coil 63, the degree of freedom is high. Further, with respect to the coil 3, the number of turns of the conductive wire may be small. In addition, an air core portion may be provided at the axis thereof.

As described above, in the console box 1 of the present embodiment, the problems that occur in the case of the conventional electromagnetic induction type (conformed to Qi standard, for example) do not occur, and thus, wireless power feeding is realized even in the console box 1 where, in the case of a conventional electromagnetic induction type, the power feeding device is difficult to be installed.

The console box 1 of a vehicle is provided at a center portion of the vehicle . This position is distanced from the outer peripheral face of the vehicle compartment, and between the console box 1 and various types of devices (for example, an instrument panel and electronic instruments mounted to a dash board) provided at the vehicle outer peripheral face side, influence of noises thereof is suppressed.

In the console box 1 of the present embodiment, the coil 3 is provided at the wall portion 21. According to the resonance type of the present embodiment, a long relative distance between the power feeding portion and the power receiving portion is realized, and even when the coil 3 provided with an air core portion is used, the power receiving device 7 (coil 63) is allowed to receive power.

In the console box 1 of the present embodiment, the coil 3 is provided at a leading end portion of the opening of the wall portion 21. According to this configuration, the coil 3 is installed in a simple manner. In addition, the distance between the coil 3 and the passenger is reduced, and the power receiving device 7 (coil 63) held in a pocket or the like of the passenger is allowed to receive power.

As described above, with respect to the coil 3 of the present embodiment, the conductive wire 30 need not be densely provided up to the axis portion, and thus, installation of the coil 3 at the wall portion 21 is realized.

In the console box 1 of the present embodiment, the wall portion 21 includes: the body member 210; and the surface member 213 provided at the leading end side (the surface side of the leading end in the protruding direction) of the body member 210. The recessed groove 211 (corresponding to accommodation recess portion) accommodating the coil 3 is formed in the body member 210.

According to this configuration, production of the box body 2 is realized by assembling the surface member 213 in a state where the coil 3 is accommodated in the recessed groove 211. That is, the box body 2 is produced in a simple manner.

The coil 3 is configured to be covered by the surface member 213. Thus, the coil 3 is not seen from the passenger in the vehicle. That is, the appearance is prevented from being impaired.

### [Embodiment 2]

The console box 1 of the present embodiment is the same as the console box 1 of the Embodiment 1 except that the configurations of the body member 210 and the surface member 213 of the box body 2 are different.

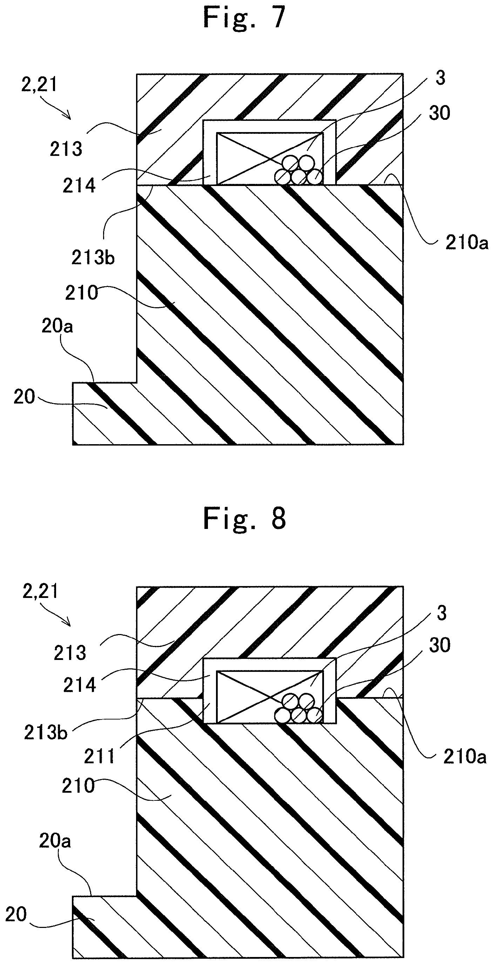

The wall portion 21 of the console box 1 of the present embodiment is shown in Fig. 7. As shown in Fig. 7, the leading end face 210a in the protruding direction of the body member 210 is a flat surface.

With respect to the surface member 213 disposed so as to cover the leading end face 210a in the protruding direction of the body member 210, a face 213b opposed to the leading end face 210a has formed therein a recessed groove 214 accommodating the coil 3. The recessed groove 214 has a configuration in which the recessed groove 211 of the Embodiment 1 is formed in the surface member 213.

### (Effect of the present embodiment)

The present embodiment has the same configuration as the Embodiment 1 except that the recessed groove 214 is formed in the surface member 213. That is, the present embodiment exhibits effects similar to the effects of the Embodiment 1.

### [Embodiment 3]

The console box 1 of the present embodiment is the same as the console box 1 of each of the Embodiments 1 and 2 except that the configurations of the body member 210 and the surface member 213 of the box body 2 are different.

The wall portion 21 of the console box 1 of the present embodiment is shown in Fig. 8. As shown in Fig. 8, similarly to the Embodiment 1, the recessed groove 211 is formed in the leading end face 210a in the protruding direction of the body member 210.

With respect to the surface member 213 disposed so as to cover the leading end face 210a in the protruding direction of the body member 210, the recessed groove 214 is formed in the face 213b opposed to the leading end face 210a, similarly to the Embodiment 2.

That is, in the present embodiment, the recessed groove 211 of the Embodiment 1 is formed in the body member 210, and the recessed groove 214 of the Embodiment 2 is formed in the surface member 213.

### (Effect of the present embodiment)

The present embodiment has the same configuration as the Embodiments 1 to 2 except that the recessed groove 211 is formed in the body member 210 and the recessed groove 214 is formed in the surface member 213. That is, the present embodiment exhibits effects similar to the effects of the Embodiments 1 to 2.

As described in the Embodiments 1 to 3, the recessed groove 211, 214 accommodating the coil 3 is formed at least one of the body member 210 and the surface member 213, and the member defining the space for accommodating the coil 3 is not limited.

### [Embodiment 4]

The console box 1 of the present embodiment is the same as the console box 1 of the Embodiment 1 except that the configurations of the body member 210 and the surface member 213 of the box body 2 are different.

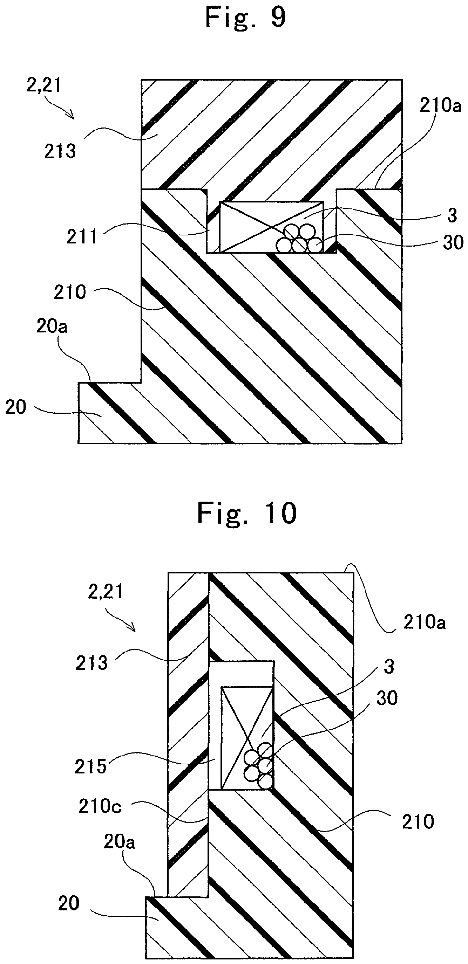

The wall portion 21 of the console box 1 of the present embodiment is shown in Fig. 9. As shown in Fig. 9, the surface member 213 disposed so as to cover the leading end face 210a in the protruding direction of the body member 210 is further filled inside the recessed groove 211, and exists also between the recessed groove 211 and the coil 3.

In the present embodiment, the surface member 213 is formed in a state where the coil 3 is disposed and sealed with resin in the recessed groove 211 in the leading end face 210a of the body member 210.

### (Effect of the present embodiment)

The present embodiment has the same configuration as the Embodiment 1 except that the recessed groove 211 and the coil 3 are resin-sealed by the surface member 213. That is, the present embodiment exhibits effects similar to the effects of the Embodiment 1.

Further, in the present embodiment, the recessed groove 211 is sealed with resin in a state where the coil 3 is disposed therein, and thus, the coil 3 is fixed in the wall portion 21. Accordingly, positional displacement of the coil 3 is suppressed, and shift of the electromagnetic resonance field formed by the coil 3 is suppressed.

Further, during travel of the vehicle, generation of abnormal sound as a result of the coil 3 vibrating and colliding with the inner surface of the recessed groove 211 is suppressed.

Even when the configuration of the present embodiment is applied to the Embodiments 2 and 3, similar effects are exhibited.

### [Embodiment 5]

The console box 1 of the present embodiment is the same as the console box 1 of the Embodiment 1 except that the configurations of the body member 210 and the surface member 213 of the box body 2 are different.

The wall portion 21 of the console box 1 of the present embodiment is shown in Fig. 10. As shown in Fig. 10, the leading end face 210a in the protruding direction of the body member 210 of the wall portion 21 is a flat surface.

At an inner surface 210c side of the body member 210, the surface member 213 is disposed so as to cover the inner surface 210c. The surface member 213 forms the inner surface of the wall portion 21. A recessed groove 215 accommodating the coil 3 is formed in the inner surface 210c of the body member 210. The recessed groove 215 is formed along the entire periphery of the tubular wall portion 21.

In the present embodiment, the surface member 213 is disposed at the surface on the inner peripheral side of the body member 210.

### (Effect of the present embodiment)

The present embodiment has the same configuration as the Embodiment 1 except that the recessed groove 215 is formed in the inner surface 210c of the body member 210 of the wall portion 21. That is, the present embodiment exhibits effects similar to the effects of the Embodiment 1.

### [Embodiment 6]

The console box 1 of the present embodiment is the same as the console box 1 of the Embodiment 5 except that the configuration of the surface member 213 is different.

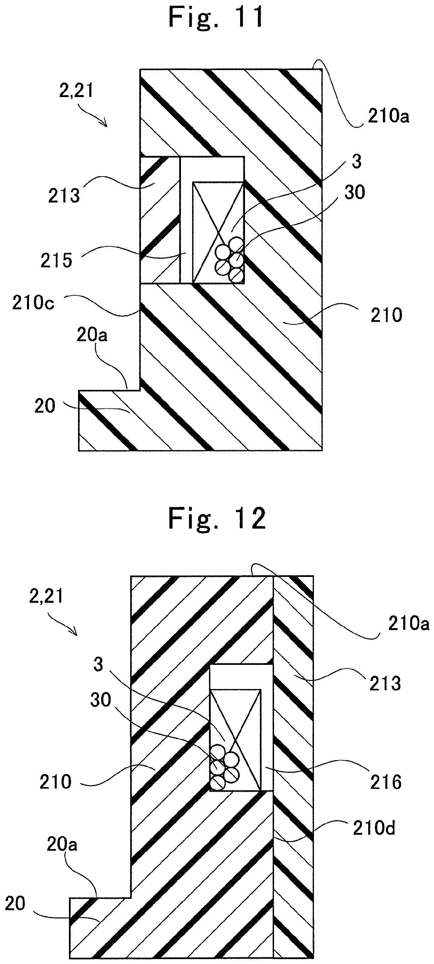

The wall portion 21 of the console box 1 of the present embodiment is shown in Fig. 11. As shown in Fig. 11, the leading end face 210a in the protruding direction of the body member 210 of the wall portion 21 is a flat surface.

Similarly to the Embodiment 5, the recessed groove 215 accommodating the coil 3 is formed in the inner surface 210c of the body member 210. The recessed groove 215 is formed along the entire periphery of the tubular wall portion 21.

The surface member 213 is disposed so as to plug the opening of the recessed groove 215. The surface member 213 is composed of a plurality of members arranged in the peripheral direction, and closes, with the plurality of members being combined, the opening of the recessed groove 215 having a loop shape extending along the peripheral direction.

### (Effect of the present embodiment)

The present embodiment has the same configuration as the Embodiment 5 except that the surface member 213 is formed so as to close only the opening of the recessed groove 215. That is, the present embodiment exhibits effects similar to the effects of the Embodiment 5.

### [Embodiment 7]

The console box 1 of the present embodiment is the same as the console box 1 of the Embodiment 5 except that the configurations of the body member 210 and the surface member 213 of the box body 2 are different.

The wall portion 21 of the console box 1 of the present embodiment is shown in Fig. 12. As shown in Fig. 12, the leading end face 210a in the protruding direction of the body member 210 of the wall portion 21 is a flat surface.

At an outer surface 210d side of the body member 210, the surface member 213 is disposed so as to cover the outer surface 210d. The surface member 213 forms the outer surface of the wall portion 21. A recessed groove 216 accommodating the coil 3 is formed in the outer surface 210d of the body member 210. The recessed groove 216 is formed along the entire periphery of the tubular wall portion 21.

### (Effect of the present embodiment)

The present embodiment has the same configuration as the Embodiment 5 except that the recessed groove 216 is formed in the outer surface 210d of the body member 210 of the wall portion 21. That is, the present embodiment exhibits effects similar to the effects of the Embodiment 5.

### [Embodiment 8]

The console box 1 of the present embodiment is the same as the console box 1 of the Embodiment 7 except that the configuration of the surface member 213 is different.

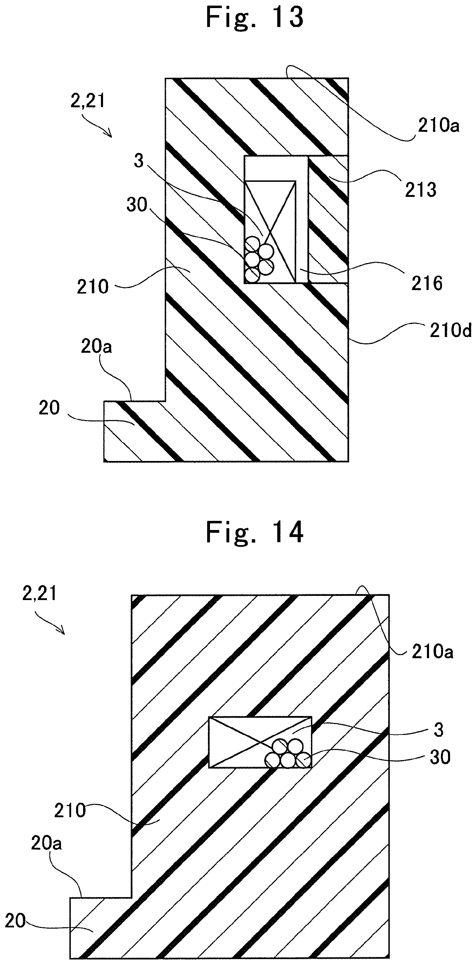

The wall portion 21 of the console box 1 of the present embodiment is shown in Fig. 13. As shown in Fig. 13, the leading end face 210a in the protruding direction of the body member 210 of the wall portion 21 is a flat surface.

Similarly to the Embodiment 7, the recessed groove 216 accommodating the coil 3 is formed in the outer surface 210d of the body member 210. The recessed groove 216 is formed along the entire periphery of the tubular wall portion 21.

The surface member 213 is embedded in the recessed groove 216 so as to plug the opening of the recessed groove 216. The surface member 213 is composed of a plurality of member arranged in the peripheral direction, and closes, with the plurality of members being combined, the opening of the recessed groove 216 having a loop shape extending along the peripheral direction.

In the present embodiment, the surface member 213 is disposed at the surface on the outer peripheral side of the body member 210.

### (Effect of the present embodiment)

The present embodiment has the same configuration as the Embodiment 7 except that the surface member 213 is formed so as to close only the opening of the recessed groove 216. That is, the present embodiment exhibits effects similar to the effects of the Embodiment 7.

### [Embodiment 9]

The console box 1 of the present embodiment is the same as the console box 1 of the Embodiment 1 except that the configuration of the box body 2 is different.

The wall portion 21 of the console box 1 of the present embodiment is shown in Fig. 14. As shown in Fig. 14, the coil 3 is integrally molded inside the wall portion 21.

In the present embodiment, the coil 3 is integrally molded in the wall portion 21 through insert molding.

### (Effect of the present embodiment)

The present embodiment has the same configuration as the Embodiment 1 except that the coil 3 is integrally molded in the wall portion 21. That is, the present embodiment exhibits effects similar to the effects of the Embodiment 1.

### [Embodiment 10]

The console box 1 of the present embodiment is the same as the console box 1 of the Embodiment 2 except that the configuration of the box body 2 is different.

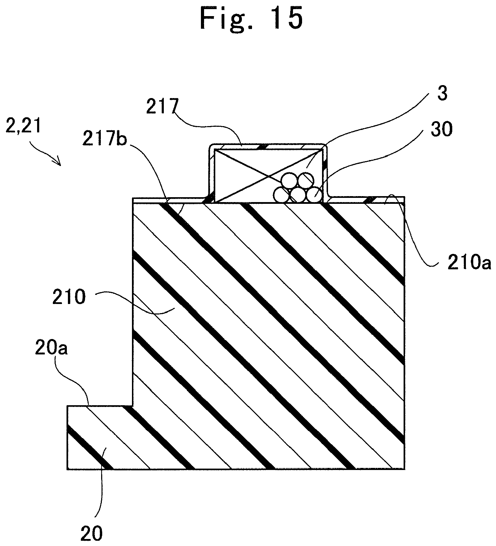

The wall portion 21 of the console box 1 of the present embodiment is shown in Fig. 15. As shown in Fig. 15, the leading end face 210a in the protruding direction of the body member 210 is a flat surface.

At the leading end face 210a in the protruding direction of the body member 210, an adhesive sheet 217 is disposed so as to cover the entirety of the leading end face 210a. The adhesive sheet 217 attaches the coil 3 to the body member 210. With respect to the adhesive sheet 217, a face 217b opposed to the leading end face 210a is the adhesive face, and covers, with the entire face thereof, the coil 3 and the leading end face 210a.

In the present embodiment, the coil 3 is attached to the box body 2.

### (Effect of the present embodiment)

The present embodiment has the same configuration as the Embodiment 2 except that the adhesive sheet 217 is used instead of the surface member 213. That is, the present embodiment exhibits effects similar to the effects of the Embodiment 2.

### [Other embodiments]

The configurations of the embodiments described above may be combined as appropriate.

In each embodiment described above, the body member 210 and the surface member 213 are each expressed as a solid body, but without being limited to this configuration, a space for weight reduction or the like may be provided therein.

In each embodiment described above, the box body 2 as a whole has a vessel shape that is open at the top thereof, but the configuration thereof is not limited thereto. For example, a configuration obtained by reversing the up-down direction or a configuration obtained by turning the vessel shape by 90 degrees so as to make the vessel shape open at a lateral side in each embodiment described above may be employed.

In each embodiment described above, a configuration in which the height of the wall portion 21 of the box body 2 having the vessel shape is constant has been shown, but the configuration is not limited thereto. For example, the protruding height of the wall portion 21 may be partially reduced. At this time, preferably, the coil 3 is obtained by winding the conductive wire 30 in the peripheral direction on a plane along a plane perpendicular to the height direction of the wall portion 21 (or the axial direction of the tubular wall portion 21). In each embodiment described above, the box body 2 as a whole has a vessel shape that is open at the top thereof, but a lid member capable of closing this opening may be further provided. It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A console box (1) having a box body (2), the box body (2) having a bottom portion (20), and a tubular wall portion (21) standing from a surface (20a) of the bottom portion (20), **characterized in that**
the console box (1) has a coil (3) provided at the box body (2), implemented as a conductive wire (30) wound along the peripheral direction of the wall portion (21), and forming an electromagnetic resonance field when being energized according to a predetermined condition.

2. The console box (1) according to claim 1, **characterized in that**
the coil (3) is disposed at the wall portion (21).

3. The console box (1) according to claim 1 or 2, **characterized in that**
the coil (3) is disposed at a leading end portion of an opening of the wall portion (21).

4. The console box (1) according to any one of claims 1 to 3, **characterized in that**
the wall portion (3) includes:
a body member (210); and
a surface member (213) disposed at a surface side of the body member (210), and
an accommodation recess portion (211, 214, 215, 216) accommodating the coil is formed in at least one of the body member (210) and the surface member (213).

5. The console box (1) according to any one of claims 1 to 4, **characterized in that**
the wall portion (21) has the coil (3) integrally molded therein.

6. The console box (1) according to any one of claims 1 to 5, **characterized in that**
the coil (21) is attached to the box body (2).
